# EUROPEAN PATENT APPLICATION

(11) **EP 4 418 195 A1**
(43) Date of publication of application: **21.08.2024**
(21) Application number: 22880778.0
(22) Date of filing: 28.09.2022
(51) Int. Cl.: G06Q 50/18

(54) **INFORMATION PROCESSING DEVICE FOR INTELLECTUAL PROPERTY RIGHTS-RELATED APPLICATION, METHOD, AND PROGRAM**

(30) Priority: 14.10.2021 JP 2021168569
(71) Applicant: FUJIFILM Corporation, Tokyo 106-8620 (JP)
(72) Inventor: HASEGAWA, Yoichi, Ashigarakami-gun, Kanagawa 258-8577 (JP); OKAMOTO, Jun, Ashigarakami-gun, Kanagawa 258-8577 (JP)
(74) Representative: Klunker IP Patentanwälte PartG mbB
(86) International application number: PCT/JP2022/036173
(87) International publication number: WO 2023/063082

(57) **Abstract**

Provided are an information processing apparatus, an information processing method, and an information processing program that enable acquisition of information on an application relating to an intellectual property right desired by a user, which is used as a reference for a measure for an interim process of an application relating to an intellectual property right, from an intellectual property right database. A processor of a patent information extraction apparatus acquires a character string including progress information of a procedure communicated between the Patent Office and an applicant for at least one application relating to an intellectual property right from the intellectual property right database (step S10). For each application relating to an intellectual property right, one or a plurality of pieces of the progress information generated in time series of the application relating to the intellectual property right are recognized from the character string including the progress information (step S16). For the recognized progress information, determination is made as to which office action from the Patent Office corresponds to an action for the application relating to the intellectual property right taken by the applicant of the application relating to the intellectual property right, and the recognized progress information is registered in a corresponding item in a worksheet (step S 18).

## Description

### BACKGROUND OF THE INVENTION

### 1. Field of the Invention

The present invention relates to an information processing apparatus, an information processing method, and an information processing program for an application relating to an intellectual property right, and particularly to a technique capable of acquiring information on an application relating to an intellectual property right desired by a user from an intellectual property right database.

### 2. Description of the Related Art

In the related art, a device for supporting evaluation and creation work of a newly created patent specification has been proposed (JP2010-224984A).

The device disclosed in JP2010-224984A includes a data creation unit that searches for and analyzes a notice of reasons for rejection from a patent examination database to create information in which descriptions or reference information regarding a patent application publication to be examined that has been rejected is associated with reasons for rejection of the patent application publication to be examined and descriptions or reference information in a cited document cited in the reasons for rejection, and a reasons-for-rejection database search sub-system that inputs a new patent specification, performs similarity search on a reasons-for-rejection database in which the information created by the data creation unit is stored using descriptions in claims of the new patent specification as a key, estimates a description range in the new patent specification similar to the information on a record searched for from the reasons-for-rejection database, and presents the description range together with the information on the searched record.

In addition, the data creation unit searches for and analyzes a written argument associated with the notice of reasons for rejection from the patent examination database, creates information by further associating descriptions or reference information regarding argument or amendment contents against the reasons for rejection with the information associated with the notice of reasons for rejection, and stores the created information in the reasons-for-rejection database.

In particular, JP2010-224984A discloses a written argument analysis unit capable of analyzing the written opinion and extracting argument contents in which an argument against the reasons for rejection is made without amendment.

In addition, patent documents related to the present invention include JP2010-541111A, JP2002-007427A, JP2007-241992A, and WO2017/209259A.

### SUMMARY OF THE INVENTION

In industry sites related to intellectual property rights, in a case where an application (a patent application, a utility model registration application, a design registration application, or a trademark registration application) relating to intellectual property rights that has received a notification of reasons for rejection is not amended through a written amendment, there is a possibility that the application is immediately subjected to a decision of rejection. Therefore, it has been common sense to amend the application even slightly as a response to the notification of reasons for rejection.

However, taking a patent application, which is one of applications relating to intellectual property rights, as an example, even in a case where claims are amended in response to the notification of reasons for rejection, inventiveness of the invention may be denied in combination with another new related art next time, or there may be a case where deficiency of description requirements or addition of new matters is pointed out for the amendment.

In a case where the inventiveness of the invention is continuously denied, the applicant may be pushed to the point where no further amendment to claims can be permitted and has no choice but to make an argument without amendment. However, it takes a lot of effort to reach that point, and the claims tend to be narrowed somewhat unsatisfactorily. This was a bitter experience for the applicant.

In addition, some of excellent ideas are thought to be cases in which the claims are simple and seemingly broad, so that the examiner of the Patent Office may be concerned that "the invention can be easily conceived and may not have the inventiveness, or in a case where the patent is granted while the claims are broad as originally filed, it may cause trouble to the society", and thus it is difficult to issue a decision of patent. In such a case, the applicant may have to unnecessarily narrow the claims in order to obtain rights early or spend considerable effort and expense to acquire rights with satisfactory claims.

In order to deal with this problem, legal precedent studies are conducted in intellectual property departments of companies or in patent offices. However, since the legal precedents have long sentences to take time to read and often deal with cases that are rarely encountered in practice, it is difficult for busy practitioners to study.

The patent specification evaluation and creation work support device disclosed in JP2010-224984A can estimate a pointed out unit (description range of the patent specification mentioned in the notice of reasons for rejection) in the specification in the notice of reasons for rejection expected for a new patent specification by processing based on the pointed out unit described in the past notice of reasons for rejection, which is premised on the presence of the new patent specification, and does not extract patent information such as cases and legal precedents desired by a user.

One embodiment according to the technique of the present disclosure provides an information processing apparatus, an information processing method, and an information processing program that enable acquisition of information on an application relating to an intellectual property right desired by a user, which is used as a reference for a measure for an interim process of an application relating to an intellectual property right, from an intellectual property right database.

According to a first aspect of the present invention, there is provided an information processing apparatus for an application relating to an intellectual property right, comprising: a first memory that stores an information processing program for an application relating to an intellectual property right; and a processor that executes the information processing program for an application relating to an intellectual property right to process information on the application relating to the intellectual property right acquired from an intellectual property right database, in which the processor performs a process of acquiring a character string including progress information of a procedure communicated between the Patent Office and an applicant for at least one application relating to the intellectual property right, from the intellectual property right database, a process of recognizing, for each application relating to the intellectual property right, one or a plurality of pieces of the progress information generated in time series for the application relating to the intellectual property right from the character string including the progress information, and a process of determining, for the recognized progress information, which office action from the Patent Office corresponds to an action for the application relating to the intellectual property right taken by the applicant of the application relating to the intellectual property right.

According to the first aspect of the present invention, the processor acquires the character string including the progress information of the procedure communicated between the Patent Office and the applicant for at least one application relating to the intellectual property right from the intellectual property right database. The intellectual property right database is a database affiliated with the Patent Office of each country and/or a commercial patent database. The progress information is information regarding a procedure communicated between the Patent Office and the applicant regarding the application relating to the intellectual property right, and is, for example, information such as a notification of reasons for rejection, a written argument, a written amendment, a decision of registration (decision of patent), a decision of rejection, and a request for trial against decision of rejection, and includes information indicating a time series order (for example, an order of generation of each piece of progress information or a year, month, and date of the procedure).

The processor recognizes, for each application relating to an intellectual property right, one or a plurality of pieces of the progress information generated in time series of the application relating to the intellectual property right from the character string including the progress information. The processor recognizes one or a plurality of pieces of the progress information generated in time series from the character string including the progress information of one application relating to the intellectual property right, but is not limited to recognizing all the pieces of the progress information, and the processor can selectively recognize the progress information desired by a user. The processor performs a process of determining, for the recognized progress information, which office action from the Patent Office corresponds to an action for the application relating to the intellectual property right taken by the applicant of the application relating to the intellectual property right. As a result, it is possible to determine what procedure was performed or not performed in what order for the office action of the application relating to the intellectual property right.

It is preferable that the information processing apparatus for an application relating to an intellectual property right according to a second aspect of the present invention further comprises a second memory that stores a table for information processing, the table including a first area including an item in which identification information for specifying the application relating to the intellectual property right is registered, and a second area including a plurality of items in which a plurality of pieces of progress information of procedures that are generatable in time series are registered, respectively, the procedures being communicated between the Patent Office and the applicant, and the processor performs a registration process of registering the acquired identification information in the item of the first area of the table, and registering the one or plurality of pieces of the progress information in a corresponding item of the progress information in the second area of the table.

According to the second aspect of the present invention, the processor registers the acquired identification information in the item of the first area of the table, and registers the one or plurality of pieces of the progress information in the corresponding items of the progress information in the second area of the table. As a result, it is possible to create a table in which identification information of the application relating to the intellectual property right and the progress information in time series associated with the office action of the application relating to the intellectual property right are registered.

In the information processing apparatus for an application relating to an intellectual property right according to a third aspect of the present invention, it is preferable that the registration process registers information on presence or absence of the acquired one or plurality of pieces of the progress information in the corresponding item in the second area of the table.

In the information processing apparatus for an application relating to an intellectual property right according to a fourth aspect of the present invention, it is preferable that the table is configured of a worksheet of spreadsheet software, items of the identification information and the plurality of pieces of progress information are assigned to a plurality of cells of the worksheet, respectively, and the registration process registers information on presence or absence of the acquired identification information and one or plurality of pieces of the progress information in corresponding cells among the plurality of cells of the worksheet.

In the information processing apparatus for an application relating to an intellectual property right according to a fifth aspect of the present invention, it is preferable that the processor performs a reception process of receiving, as extraction information, information indicating presence or absence of a procedure corresponding to any one or plurality of items among the plurality of items of the second area, and an extraction process of extracting the identification information of the application relating to the intellectual property right, which satisfies a condition of the extraction information, from the table based on the received extraction information.

According to the fifth aspect of the present invention, in a case where, as extraction information, information indicating presence or absence of a procedure corresponding to any one or plurality of items among the plurality of items of the second area is received, the identification information of the patent application, which satisfies a condition of the extraction information, is extracted from the table based on the received extraction information. As a result, in the interim process of the application relating to the intellectual property right, it is possible to extract information (case) of the application relating to the intellectual property right desired by the user such as which procedure is performed in what order to become a decision of registration, and the extracted case can be used as a reference for the practice of the interim process.

In the information processing apparatus for an application relating to an intellectual property right according to a sixth aspect of the present invention, it is preferable that the spreadsheet software includes a search function or a filter function, and the spreadsheet software receives a search expression or selection of one or a plurality of filters indicating presence or absence of a procedure corresponding to any one or plurality of items among the plurality of items of the second area, and extracts the identification information of the application relating to the intellectual property right satisfying the search expression or filtered by the selected filter from the worksheet using the received search expression or the selected one or plurality of filters.

In the information processing apparatus for an application relating to an intellectual property right according to a seventh aspect of the present invention, it is preferable that the first area of the table includes an item in which bibliographic matters including identification information and a filing date of the application relating to the intellectual property right are registered.

In the information processing apparatus for an application relating to an intellectual property right according to an eighth aspect of the present invention, it is preferable that the processor performs a reception process of receiving extraction information having one or a plurality of pieces of progress information of any procedure including information in time series, the procedure being communicated between the Patent Office and the applicant regarding an application relating to an intellectual property right, a process of acquiring identification information for specifying the application relating to the intellectual property right and information to be extracted indicating one or a plurality of pieces of the progress information generated in time series, from the character string for each application relating to the intellectual property right, and an extraction process of extracting the identification information of the application relating to the intellectual property right having the information to be extracted, which matches the extraction information including a time series order of the extraction information, based on the received extraction information.

According to the eighth aspect of the present invention, it is possible to receive extraction information having one or a plurality of pieces of progress information of any procedure including information in time series, the procedure being communicated between the Patent Office and the applicant regarding an application relating to an intellectual property right, and extract the identification information of the application relating to the intellectual property right having the information to be extracted (information to be extracted indicating one or a plurality of pieces of progress information generated in time series and acquired from the intellectual property right database), which matches the extraction information including a time series order of the extraction information, based on the received extraction information. As a result, based on the extraction information having one or a plurality of pieces of progress information of any procedure including information in time series, it is possible to extract an application (case) relating to the intellectual property right desired by the user such as which procedure is performed in what order (time series order) to become a decision of registration (decision of patent), and the extracted case can be used as a reference for the practice of the interim process.

In the information processing apparatus for an application relating to an intellectual property right according to a ninth aspect of the present invention, it is preferable that in a case where the progress information is set as first progress information, second progress information, and third progress information in time series, the extraction information has at least one of the following: the first progress information is present or absent before the second progress information; the second progress information is present or absent after the first progress information; the second progress information is present or absent between the first progress information and the third progress information; or the second progress information is present or absent at the same time as the first progress information.

In the information processing apparatus for an application relating to an intellectual property right according to a tenth aspect of the present invention, it is preferable that the extraction information has, as a progress information group consisting of a plurality of pieces of the progress information in time series, at least one of a first progress information group including a request for trial against decision of rejection and a trial decision of registration, in which a written amendment or a written correction of mistranslation is not submitted between the request for trial against decision of rejection and the trial decision of registration, a second progress information group including a release of pre-trial examination and the trial decision of registration, in which a written amendment or a written correction of mistranslation is not submitted between the release of pre-trial examination and the trial decision of registration, or a third progress information group including a notification of reasons for rejection, in which the reasons for rejection in the notification of reasons for rejection are overcome without submitting a written amendment or a written correction of mistranslation after the notification of reasons for rejection is issued.

By the extraction information having the first progress information group, it is possible to extract a case where a trial decision of registration (patent) is made without amendment or correction of mistranslation after a request for trial against decision of rejection in an application that has not been amended upon requesting a trial against decision of rejection. By the extraction information having the second progress information group, it is possible to extract a case where a trial decision of patent (trial decision of registration) is made without amendment or correction of mistranslation after the examiner reports a release of pre-trial examination in a patent application that has been amended or corrected for mistranslation upon requesting a trial against decision of rejection. By the extraction information having the third progress information group, it is possible to extract a case where the applicant was able to overcome the rejection without submitting a written amendment or a written correction of mistranslation.

In the information processing apparatus for an application relating to an intellectual property right according to an eleventh aspect of the present invention, it is preferable that the third information group has at least one of a fourth progress information group including a plurality of times of notifications of reasons for rejection, in which a written amendment or a written correction of mistranslation is not submitted between two notifications of reasons for rejection in time series, a fifth progress information group including a notification of reasons for rejection and a decision or registration, in which the decision of registration is made without submitting a written amendment or a written correction of mistranslation after the notification of reasons for reason is issued, or a sixth progress information group including a notification of reasons for rejection and a trial decision of registration, in which the trial decision of registration is made without submitting a written amendment or a written correction of mistranslation after the notification of reasons for reason is issued.

By the extraction information having the fourth progress information group, the fifth progress information group, or the sixth progress information group, it is possible to extract a case where, in an application that has received at least two reasons for rejection that are temporally adj acent to each other, the former reason for rejection of the two reasons for rejection is resolved without performing amendment or correction of mistranslation, a case where the reasons for rejection are resolved without performing amendment or correction of mistranslation and a decision of registration is made, or a case where the notification of reasons for rejection is issued while the trial against decision of rejection is pending, the reasons for rejection are resolved without performing amendment or correction of mistranslation, and a trial decision of registration is made.

In the information processing apparatus for an application relating to an intellectual property right according to a twelfth aspect of the present invention, it is preferable that the processor outputs the identification information extracted by the extraction process.

In the information processing apparatus for an application relating to an intellectual property right according to a thirteenth aspect of the present invention, it is preferable that the processor outputs only the extracted identification information in a list table, collectively outputs the extracted identification information to be distinguishable from non-extracted identification information, or outputs the extracted identification information in an enhanced manner to be distinguishable from the non-extracted identification information.

In the information processing apparatus for an application relating to an intellectual property right according to a fourteenth aspect of the present invention, it is preferable that the processor displays the extracted identification information on a display, prints the identification information out from a printer, or stores the identification information in a memory.

According to a fifteenth of the present invention, there is provided an information processing method for an application relating to an intellectual property right, which is executed by an information processing apparatus including a first memory that stores an information processing program for an application relating to an intellectual property right, and a processor that executes the information processing program for an application relating to an intellectual property right to process information on the application relating to the intellectual property right acquired from an intellectual property right database, the method comprising: a step of acquiring a character string including progress information of a procedure communicated between the Patent Office and an applicant for at least one application relating to the intellectual property right, from the intellectual property right database; a step of recognizing, for each application relating to the intellectual property right, one or a plurality of pieces of the progress information generated in time series for the application relating to the intellectual property right from the character string including the progress information; and a step of determining, for the recognized progress information, which office action from the Patent Office corresponds to an action for the application relating to the intellectual property right taken by the applicant of the application relating to the intellectual property right.

According to a sixteenth aspect of the invention, there is provided an information processing program causing a computer to execute the information processing method for an application relating to an intellectual property right according to the fifteenth aspect.

According to the aspects of the present invention, it is possible to acquire information on an application relating to an intellectual property right desired by a user, which is used as a reference for a measure for an interim process of an application relating to an intellectual property right, from the intellectual property right database.

### BRIEF DESCRIPTION OF THE DRAWINGS

Fig. 1 is a diagram showing a system configuration including an information processing apparatus for an application relating to an intellectual property right according to an embodiment of the present invention.
Fig. 2 is a block diagram showing an embodiment of a hardware configuration of the information processing apparatus for the application relating to the intellectual property right according to the present invention.
Fig. 3 is a flowchart showing a first embodiment of an information processing method for the application relating to the intellectual property right according to the present invention.
Fig. 4 is a diagram showing an example of a worksheet of spreadsheet software applied to the present invention.
Fig. 5 is a flowchart showing a procedure of an extraction process of information on the application relating to the intellectual property right.
Fig. 6 is a flowchart showing a second embodiment of the information processing method for the application relating to the intellectual property right according to the present invention.
Fig. 7 is a subroutine showing an example of a process of step S140 of the flowchart of Fig. 6.

### DESCRIPTION OF THE PREFERRED EMBODIMENTS

Hereinafter, preferred embodiments of an information processing apparatus, an information processing method, and an information processing program for an application relating to an intellectual property right according to the present invention will be described with reference to the accompanying drawings.

### [System Configuration Including Information Processing Apparatus for Application Relating to Intellectual Property Right]

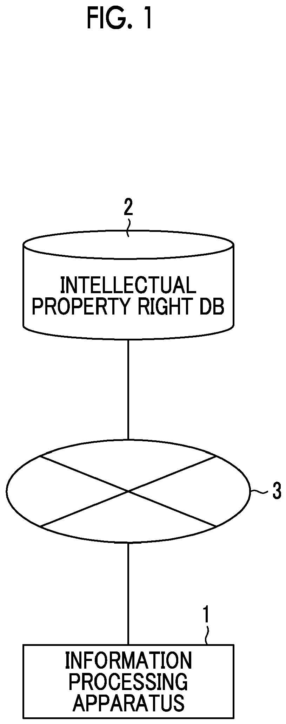

Fig. 1 is a diagram showing a system configuration including an information processing apparatus for an application relating to an intellectual property right according to an embodiment of the present invention.

In Fig. 1, an information processing apparatus 1 for the application relating to the intellectual property right can access an intellectual property right database (DB) 2 via a network 3 and can acquire necessary information from the intellectual property right DB 2.

The intellectual property right DB 2 is a database affiliated with the Patent Office of each country and/or a commercial patent database. A database affiliated with the Patent Office of Japan corresponds to a patent information platform (J-PlatPat). J-PlatPat includes information on publications related to patents, utility models, designs, trademarks, and trial decisions, and legal statuses such as procedures and examination progress in the world including not only Japan but also the United States and Europe, and provides a free-of-charge search and viewing service for information on applications relating to intellectual property rights.

Examples of the commercial patent database include a patent information provision service "Sharereserch" of Hitachi, Ltd. In the present example, "Sharereserch" is used as the intellectual property right DB2, but the present invention is not limited thereto, and various other databases can be used.

### [Hardware Configuration of Information Processing Apparatus for Application Relating to Intellectual Property Right]

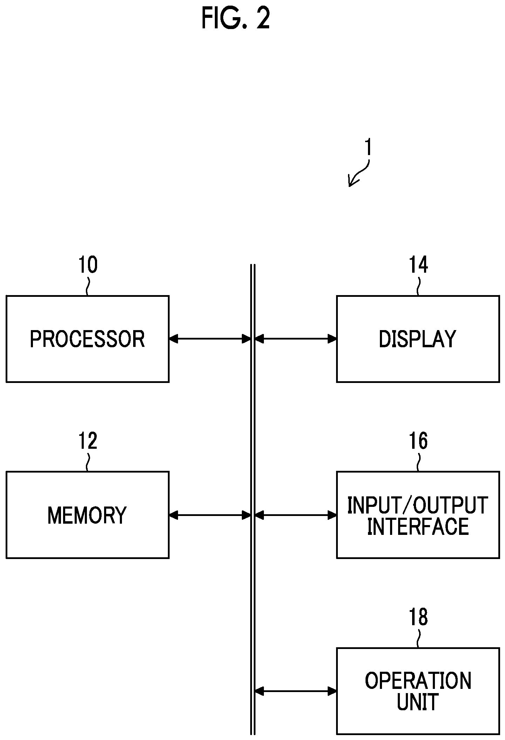

Fig. 2 is a block diagram showing an embodiment of a hardware configuration of the information processing apparatus for the application relating to the intellectual property right according to the present invention.

The information processing apparatus 1 in the application relating to the intellectual property right shown in Fig. 2 performs a process of acquiring a character string including progress information of the procedure communicated between the Patent Office and the applicant, for at least one application relating to the intellectual property right, from the intellectual property right DB 2, a process of recognizing one or a plurality of pieces of the progress information that have generated in time series for the application relating to the intellectual property right from the character string including the progress information for each application relating to the intellectual property right, and a process of determining, for the recognized progress information, which office action from the Patent Office corresponds to the action for the application relating to the intellectual property right taken by the applicant of the application relating to the intellectual property right.

The information processing apparatus 1 is configured of a personal computer, a workstation, or the like, and comprises a processor 10, a memory 12, a display 14, an input/output interface 16, an operation unit 18, and the like.

The processor 10 is configured of a central processing unit (CPU) and the like, and functions as a processing unit that performs various processes of enabling the acquisition of the application relating to the intellectual property right desired by the user from the intellectual property right DB 2 by executing an information processing program for the application relating to the intellectual property right, while collectively controlling each unit of the information processing apparatus 1 for the application relating to the intellectual property right.

The memory 12 includes a flash memory, a read-only memory (ROM), a random access memory (RAM), a hard disk device, and the like. The flash memory, the ROM, or the hard disk device (first memory) is a non-volatile memory that stores various programs including an operation system and an information processing program for an application relating to an intellectual property right (hereinafter, simply referred to as an "information processing program"). The RAM functions as a work area of processing performed by the processor 10 and temporarily stores the information processing program and the like stored in the flash memory or the like. The processor 10 may incorporate a part (RAM) of the memory 12.

The information processing program according to the present application includes a program created as application software in cooperation with spreadsheet software (for example, Excel (registered trademark)) and a program that causes the processor 10 to execute the extraction process of the patent information alone without cooperating with the spreadsheet software.

The spreadsheet software and a table (worksheet) for information processing of an application relating to an intellectual property right created by the spreadsheet software are stored in the memory 12 (second memory). The first memory in which the information processing program is stored and the second memory in which the table for information processing of the application relating to the intellectual property right is stored may be the same memory 12 or may be physically different memories.

In accordance with the information processing program, the processor 10 acquires the character string related to the application relating to the intellectual property right from the intellectual property right DB 2 via the input/output interface 16 while using the RAM as the work area, and temporarily stores the acquired character string in the RAM of the memory 12 or the like.

Hereinafter, in the present example, the patent application among the patent application, the utility model registration application, the design registration application, and the trademark registration application, which are applications relating to the intellectual property right, will be described as an example, but the present invention can be applied to the utility model registration application, the design registration application, or the trademark registration application. However, it goes without saying that the progress information of the procedure communicated between the Patent Office and the applicant is in accordance with a legal system of each of the Utility Model Act, the Design Act, and the Trademark Act.

The processor 10 can acquire the character string related to the patent application by using a service function provided by the intellectual property right DB 2. For example, a period of patent application filing dates can be designated by a patent search engine of "Sharereserch", and for at least one patent application, a character string such as identification information for specifying the patent application, and progress information of a procedure communicated between the Patent Office and the applicant regarding the patent application can be acquired (batch-downloaded) from the patent search engine.

The identification information for specifying the patent application can be, for example, a "patent application number". It is possible to acquire a character string indicating the "filing date" and other bibliographic matters in addition to the identification information for specifying the patent application.

The progress information of the procedure includes "interim record (application/registration)", "examination/status", and information in time series (order of generation of each progress information or year, month, and date of the procedure). For example, in a case where, for a certain patent application, "notification of reasons for rejection" —> "written amendment", "written argument" → "notification of reasons for rejection" → "written amendment", "written argument" → "decision of rejection" → "request for trial against decision of rejection", "written amendment" → "release of pre-trial examination" → "trial decision of patent (trial decision of registration)" are performed, a character string including these pieces of progress information in time series is acquired.

For example, regarding the "trial decision of patent", in a case where there is a "trial decision" and there is a record of "canceling the original decision and patenting" in the "trial decision" field in the progress information, it can be determined that the "trial decision" is the "trial decision of patent", and regarding the "trial decision of rejection", in a case where there is a "trial decision" and there is a record of "not patenting" in the "trial decision" field in the progress information, it can be determined that the "trial decision" is the "trial decision of rejection". As described above, in the present invention, information such as "trial decision of patent" and "trial decision of rejection" that is indirectly determined by a combination of a plurality of pieces of the progress information is also one piece of the progress information.

The character string including the identification information for specifying the patent application and the progress information of the procedure as described above can be acquired in a data format of comma separated values (CSV) and recorded on a CSV sheet.

The processor 10 performs a process of recognizing one or a plurality of pieces of the progress information generated in time series of the patent application from the character string including the progress information for each of the patent applications acquired from the intellectual property right DB 2. In this case, the processor 10 can recognize what kind of information the acquired identification information and the individual progress information generated in time series are.

The processor 10 performs a process of determining, for the recognized progress information, which office action from the Patent Office corresponds to the action for the application (patent application) relating to the intellectual property right taken by the applicant of the application (patent application) relating to the intellectual property right. In a first embodiment described later, the processor 10 cooperates with the spreadsheet software to register the identification information and information on the presence or absence of individual progress information generated in time series acquired from the acquired character string in a worksheet of the spreadsheet software prepared in advance. However, in a case of registration in the worksheet, a determination result as to which office action from the Patent Office corresponds to the action for the patent application taken by the applicant can be used. In a case where the registration of the identification information and the information on the presence or absence of the progress information related to all the patent applications is completed in the worksheet, the worksheet is completed, and the patent information desired by the user can be extracted using the worksheet.

In addition, in a second embodiment to be described later, the processor 10 recognizes identification information for specifying the patent application and information to be extracted indicating one or a plurality of pieces of progress information generated in time series from the character string for each of the patent applications. Then, based on the information to be extracted related to all the patent applications and extraction information designated by the user, the identification information of the patent application having the information to be extracted that matches the extraction information (including the information in the time series) is extracted. In a case of extracting the identification information of the patent application having the information to be extracted that matches the extraction information, the determination result as to which office action from the Patent Office corresponds to the action for the patent application taken by the applicant can be used. The extraction information is information having one or a plurality of pieces of progress information of any procedure that includes information in time series designated by the user and is information used for extracting the patent information desired by the user.

The display 14 displays the extraction result (patent information desired by the user including identification information for specifying a patent application) extracted by the information processing apparatus 1. The user can acquire desired patent information (case) from the extraction result displayed on the display 14 and can use the patent information as a reference for practice such as the interim process.

In addition, the display 14 is used as a part of a graphical user interface (GUI) in a case of displaying a worksheet or receiving an input of the extraction information or the like from the operation unit 18.

The input/output interface 16 includes a connection unit that is connectable to an external apparatus, a communication unit that can be connected to a network, and the like. As the connection unit that is connectable to the external apparatus, a universal serial bus (USB), a high-definition multimedia interface (HDMI (Registered Trademark)), or the like can be applied. The processor 10 can acquire necessary information from the intellectual property right DB 2 via the input/output interface 16 and can print and print the extraction result out from a printer (not shown) via the input/output interface 16.

The operation unit 18 includes a pointing device, such as a mouse, and a keyboard, and functions as a user interface that receives the extraction information and various instruction inputs.

### [First Embodiment of Information Processing Method for Application Relating to Intellectual Property Right]

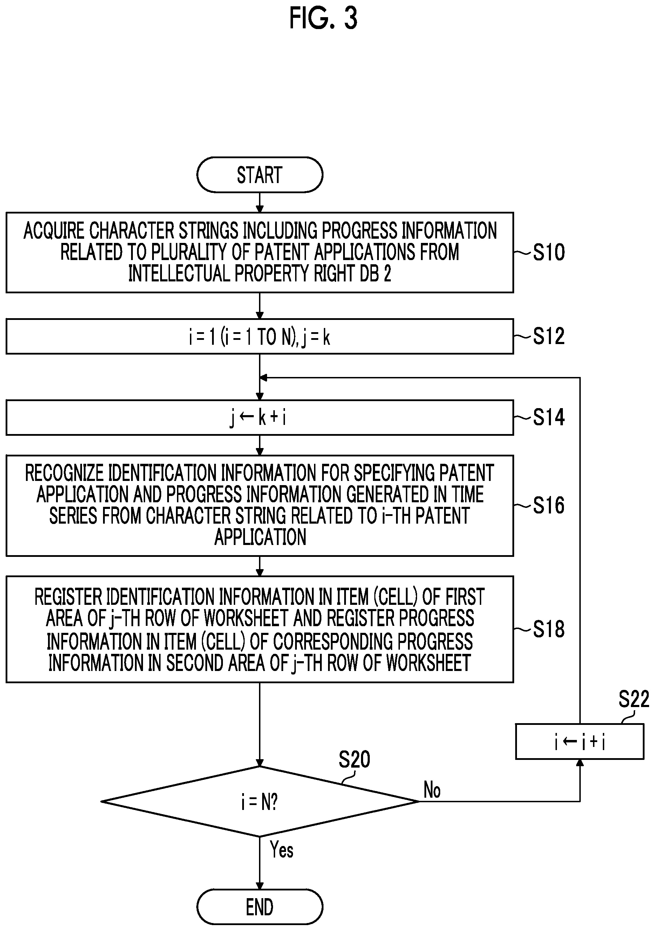

Fig. 3 is a flowchart showing a first embodiment of an information processing method for the application relating to the intellectual property right according to the present invention, and particularly shows a processing procedure by the processor 10 of the information processing apparatus 1.

In addition, an information processing program used in the information processing method for the application relating to the intellectual property right of the first embodiment cooperates with spreadsheet software and registers various kinds of information in a worksheet of the spreadsheet software.

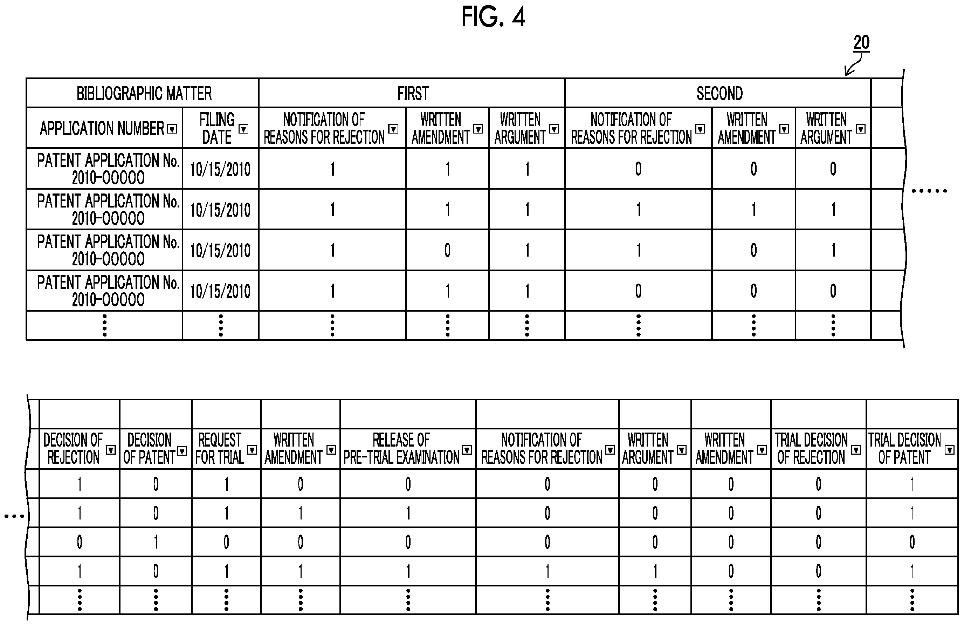

Fig. 4 is a diagram showing an example of a worksheet of the spreadsheet software applied to the present invention.

A worksheet 20 shown in Fig. 4 is configured of cells divided in a lattice shape, cells arranged in a vertical direction are "columns" of the worksheet 20, and cells arranged in a horizontal direction are "rows" of the worksheet 20.

The worksheet 20 shown in Fig. 4 functions as a table for information processing of an application relating to intellectual property rights, which includes a first area in which bibliographic matters including a "patent application number", which is one of the identification information of the patent application, and a "filing date" are registered, and a second area including a plurality of items in which a plurality of pieces of progress information of procedures that can be generated in time series are registered, respectively, the procedures being communicated between the Patent Office and the applicant.

In the worksheet 20 shown in Fig. 4, a first column is assigned as a column in which the "patent application number" is registered, the second column is assigned as a column in which the "filing date" is registered, and third and subsequent columns are sequentially assigned as columns in which progress information (presence or absence of the progress information) that can be generated in time series is registered.

In the worksheet 20 shown in Fig. 4, the third column is assigned as a column for registering the information on the presence or absence of a first notification for reasons for rejection, and fourth and fifth columns are respectively assigned as columns for registering the presence or absence of the written amendment book and the written argument in a case where a response is made to the first notification of reasons for rejection. Sixth to eighth columns are assigned as columns for registering the information on the presence or absence of second notification of reasons for rejection and the presence or absence of the written amendment and the written argument in a case where a response is made to the second notification of reasons for rejection, and subsequently columns corresponding to the number of times that the notification of reasons for rejection is issued are assigned as assumed in the same manner.

In subsequent columns in the worksheet 20, columns for registering information on the presence or absence of "decision of rejection", "decision of patent" → "request for trial (trial against decision of rejection)" → "written amendment (in a case of requesting for trial)", "release of pre-trial examination" → "notification of reasons for rejection" → "written argument", "written amendment" → "trial decision of rejection", "trial decision of patent" in time series are assigned.

Examples of the progress information of other procedures include "interview record", "response record", "hearing", and "written reply".

The worksheet 20 may further include columns of items such as "opposition to patent", "written answer", "trial for patent invalidation", "trial for correction", "request for correction", and "trial decision". In addition, the column of "written amendment" may include "written correction of mistranslation".

Meanwhile, in each cell of a second row of the worksheet 20, an item (character information) indicating the content of each column is added, and "filter" is set as shown by the icon "▼". The "filter" is used in a case of narrowing down and displaying data (patent information) satisfying desired extraction information from a data list of the worksheet 20.

In each row of third and subsequent rows of the worksheet 20, character information indicating bibliographic matters such as "patent application number" for each patent application and information indicating the presence or absence of the progress information of the procedure generated in time series are registered in cells of the corresponding item (column). In the present example, the information indicating the presence or absence of the progress information is registered as "1" and "0", but the present invention is not limited thereto. Other character information may be used, and a blank may be used instead of "0".

In Fig. 3, the processor 10 designates the period of the patent application filing date by the operation unit 18, and acquires character strings related to a plurality of patent applications filed within the designated period from the intellectual property right DB 2, such as identification information for specifying each patent application, and the progress information of the procedure communicated between the Patent Office and the applicant for the patent application (step S10). In the present example, the character string is acquired in a CSV data format and is temporarily recorded on a CSV sheet.

Next, a parameter i indicating the number of patent applications is set to i = 1, and a parameter j indicating the "row" of the worksheet 20 of the spreadsheet software prepared in advance shown in Fig. 4 is set to j = k (step S12). Here, in a case where the total number of the plurality of patent applications is denoted by N, the parameter i takes a value in a range of 1 to N. Further, k is a parameter indicating a "row" at the end of the data list of the worksheet 20 at the start of the present process.

The processor 10 specifies the parameter j indicating a "row" for one patent application to be newly registered in the worksheet 20 (step S14). The parameter j can be determined by k + i.

Subsequently, the processor 10 analyzes a character string related to an i-th patent application from the CVS sheet in which character strings related to the plurality of (N) patent applications acquired in step S10 are recorded, recognizes the "patent application number" and the "filing date", which are the identification information for specifying the patent application, and recognizes the progress information that has been generated in time series (step S 16).

The processor 10 registers the "patent application number" and the "filing date", which are identification information for specifying the patent application recognized in step S 16, in items of the first area (in this example, cells of the first column and the second column) of the j-th row of the worksheet 20, and registers the progress information (information indicating the presence or absence of the progress information) generated in time series in corresponding items (cells) of the progress information in the second area (in this example, third and subsequent columns) of the j-th row of the worksheet 20 (step S18).

Next, the processor 10 determines whether or not the parameter i is i = N (step S20). In a case where the processor 10 determines that the parameter i is not i = N (in a case of "No"), the processor 10 increments the parameter i by 1 (step S22) and then proceeds to step S 14. As a result, the processes from step S14 to step S22 are repeated, and the information on each of patent applications is sequentially registered in each column of the worksheet 20.

On the other hand, in a case where the processor 10 determines that the parameter i is i = N (in a case of "Yes"), the registration of the information on all the plurality (N) of the patent applications ends, and thus the registration process in the worksheet 20 ends. As a result, information on the character string such as the progress information of the patent application recorded on the CVS sheet is registered (imported) in the worksheet 20, and the data list of the worksheet 20 is completed (see Fig. 4).

### <Extraction Process of Patent Information>

Next, a case of acquiring the patent information desired by the user using the worksheet will be described.

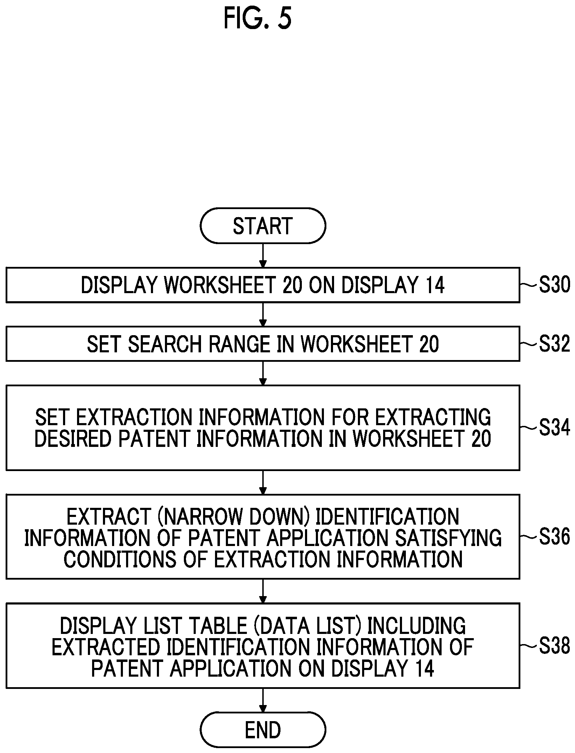

Fig. 5 is a flowchart showing a procedure of the extraction process of the patent information. The worksheet 20 of the spreadsheet software has a search function or a filter function.

In Fig. 5, the processor 10 displays the worksheet 20 on the display 14 (step S30). In the worksheet 20, information on a plurality of patent applications is registered as a data list.

The user uses the display 14 and the operation unit 18 to set a search range (step S32). The search range can be set by a range of "patent application number" or "filing date". In addition, an entire range of the data list registered in the worksheet 20 may be the search range.

Subsequently, the user uses the display 14 and the operation unit 18 to set extraction information for extracting the patent information desired by the user in the worksheet 20 (step S34). The extraction information is information indicating the presence or absence of a procedure corresponding to any one or a plurality of items (cells) among a plurality of items (cells) of the second area in the worksheet 20, and the processor 10 receives the set extraction information (performs a reception process).

The processor 10 performs an extraction process of extracting identification information (patent application number) of the patent information having data satisfying conditions of the received extraction information, and the like, from the data list in the search range of the worksheet 20 (step S36). The processor 10 receives a retrieval expression indicating the extraction information or selection of one or a plurality of filters corresponding to the extraction information, and extracts data satisfying the received retrieval expression or filtered by the selected filter.

The processor 10 displays a list table (data list) including the extracted identification information of the patent application on the display 14 (step S38).

In this case, the processor 10 can output only the identification information extracted by the extraction process in the list table and can collectively output the identification information extracted by the extraction process to be distinguishable from non-extracted identification information. For example, the extracted identification information can be output in a distinguishable manner by collectively outputting the extracted identification information to an upper part of the list table and collectively outputting the non-extracted identification information to a lower part of the list table. In addition, the processor 10 can output the identification information extracted by the extraction process in an enhanced manner to be identifiable from the non-extracted identification information. For example, the extracted identification information can be enhanced by adding a color to the extracted identification information or by adding a difference in brightness to the extracted identification information.

Next, a specific example of extracting patent information desired by a user using a filter function of a spreadsheet software will be described.
1) Case of extracting a case where a trial decision of patent is made without amendment or correction of mistranslation after the request for trial against decision of rejection is made in a patent application in which amendment is not made upon requesting the trial against decision of rejection
   The extraction information in this case can have a progress information group (first progress information group) including the request for trial against decision of rejection and trial decision of patent, in which a written amendment or a written correction of mistranslation is not submitted between the request for trial against decision of rejection and the trial decision of patent, the progress information group consisting of a plurality of pieces of progress information in time series.
   According to the extraction information having the first progress information group, in Fig. 4, by selecting "1" in each filter of "request for trial" and "trial decision of patent" and selecting "0" in each filter of "written amendment" that may be submitted after (or at the same time as) the "request for trial", the case of the above 1) can be extracted (narrowed down). In the worksheet 20 shown in Fig. 4, the patent application in the third row having the first progress information group is extracted.
2) Case of extracting a case where a trial decision of patent is made without amendment or correction of mistranslation after a pre-trial examination report is issued from the examiner in a patent application in which amendment or correction of mistranslation is made upon requesting the trial against decision of rejection
   The extraction information in this case can have a progress information group (second progress information group) including the release of pre-trial examination and the trial decision of patent, in which a written amendment or a written correction of mistranslation is not submitted between the release of pre-trial examination and the trial decision of patent.
   According to the extraction information having the second progress information group, in Fig. 4, by selecting "1" in each filter of "release of pre-trial examination" and "trial decision of patent", and selecting "0" in the filter of "written amendment" that may be submitted after or at the same time as the "release of pre-trial examination", the case of the above 2) can be extracted (narrowed down). In the worksheet 20 shown in Fig. 4, the patent application in the fourth row having the second progress information group is extracted.
3) Case of extracting a case where the rejection has been overcome by the applicant without submitting the written amendment or the written correction of mistranslation

The expression "the rejection has been overcome" as used herein means that "the next decision of rejection or trial decision of rejection has not been made, and the decision of patent, the trial decision of patent, or the notification of reasons for rejection has been made". For example, a case of "notification of reasons for rejection → submission of written argument only → notification of reasons for rejection" is also included. This is because a case where the decision of rejection has not been made by submitting only the written argument is considered to be a good case where the rejection has been overcome only by argument without amendment for the reasons for rejection. The way of assertion in the written argument of these cases is considered to be of great reference.

The extraction information in this case can have a progress information group (third progress information group) including the notification of reasons for rejection, in which the reasons for rejection in the notification of reasons for rejection are overcome without submitting the written amendment or written correction of mistranslation after the notification of reasons for rejection is issued.

More specifically, the third information group may be a progress information group (fourth progress information group) including a plurality of times of notifications of reasons for rejection, in which the written amendment or written correction of mistranslation is not submitted between two notifications of reasons for rejection in time series, a progress information group (fifth progress information group) including the notification of reasons for rejection and decision of patent, in which the decision of patent is made without submitting the written amendment or written correction of mistranslation after the notification of reasons for reason is issued, or a progress information group (sixth progress information group) including the notification of reasons for rejection and the trial decision of patent, in which the trial decision of patent is made without submitting the written amendment or written correction of mistranslation after the notification of reasons for reason is issued.

According to the extraction information having the fourth progress information group, in Fig. 4, by selecting "1" in each filter of the first "notification of reasons for rejection" and the second "notification of reasons for rejection" and selecting "0" in the filter of the "written amendment" that may be submitted after or at the same time as the "release of pre-trial examination" is made, the case of the above 3) can be extracted (narrowed down). In the worksheet 20 shown in Fig. 4, the patent application in the fifth row having the fourth progress information group is extracted.

In the above example, the patent information (case) desired by the user is narrowed down by the filter set in the cell of each item in accordance with the extraction information, but the present invention is not limited thereto. The patent information (case) desired by the user may be searched by creating a search expression of search conditions corresponding to the extraction information and applying the search expression to the worksheet 20.

According to the present invention, it is possible to easily extract the patent information desired by the user as a reference for a measure for the interim process of the patent application from the intellectual property right DB2. For example, it is possible to acquire a case of argument or amendment that has been effective against the rejection from the Patent Office and refer to or research the acquired cases, so that it is possible to reduce the effort of practitioners required to overcome the rejection. In addition, it can be expected that the submission of more appropriate written argument and written amendment from the applicant will increase, and it will be possible for Patent Office examiners and trial judges to perform efficient examinations and trials.

### [Second Embodiment of Information Processing Method for Application Relating to Intellectual Property Right]

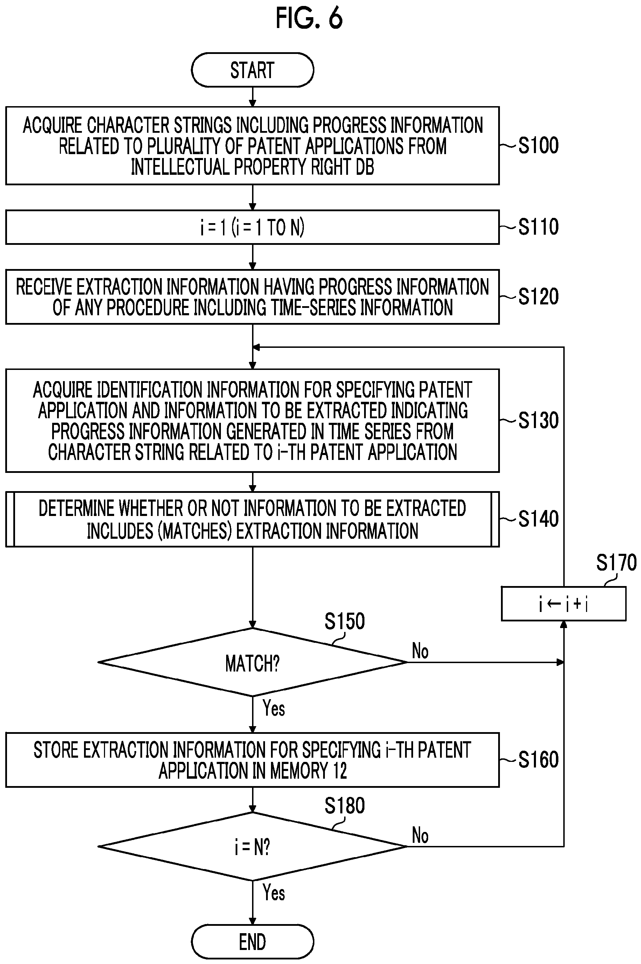

Fig. 6 is a flowchart showing a second embodiment of an information processing method for the application relating to the intellectual property right according to the present invention, and particularly shows a processing procedure by the processor 10 of the information processing apparatus 1.

In Fig. 6, the processor 10 designates the period of the patent application filing date by the operation unit 18, and acquires (batch-downloads) character strings related to a plurality of patent applications filed within the designated period from the intellectual property right DB 2, such as identification information for specifying each patent application, and the progress information of the procedure communicated between the Patent Office and the applicant for the patent application (step S100). In the present example, the character string is acquired in a CSV data format and is recorded on a CVS sheet.

Next, the parameter i indicating the number of patent applications is set to i = 1 (step S110). Here, in a case where the total number of the plurality of patent applications is denoted by N, the parameter i takes a value in a range of 1 to N.

Subsequently, the user uses the display 14 and the operation unit 18 to set extraction information for extracting the patent information desired by the user, and the processor 10 receives the set extraction information (step S120). Here, the extraction information is information having one or a plurality of pieces of progress information of any procedure including time series information, which is progress information of a procedure communicated between the Patent Office and the applicant regarding the patent application. In addition, this extraction information can be appropriately set according to what kind of case the user wants to extract.

The processor 10 analyzes the character string related to the i-th patent application from the CSV sheet to acquire identification information ("patent application number") for specifying the patent application and information (information to be extracted) indicating one or a plurality of pieces of progress information generated in time series from the character string (step S130).

The user sets extraction information (extraction condition) for extracting the patent information desired by the user, and the processor 10 receives the extraction information and extracts a patent application that matches the extraction information.

Here, in a case where the progress information of the patent application is set as first progress information, second progress information, and third progress information in time series, the extraction information may have at least one of the following: a) the first progress information is present or absent before the second progress information; b) the second progress information is present or absent after the first progress information; c) the second progress information is present or absent between the first progress information and the third progress information; or d) the second progress information is present or absent at the same time as the first progress information.

For example, in a case of extracting the patent application that has been voluntarily amended, the first progress information may be submission of the written amendment, the second progress information may be the first notification of reasons for rejection, and the extraction information may have the first progress information before the second progress information. In a case where there are a plurality of notifications of reasons for rejection, the earliest notification of reasons for rejection in time series is the first notification of reasons for rejection.

In addition, in a case of extracting a case where the notification of reasons for rejection has been issued but at least the reasons for rejection have been overcome without submitting the written amendment, the first progress information may be the first notification of reasons for rejection, the third progress information may be the second and subsequent notifications of reasons for rejection or the decision of patent, and the extraction information may be such that the second progress information (submission of the written amendment) is not present between the first progress information and the third progress information.

The extraction information can be set by any one of the above a) to d) or combining two or more of the above a) to d).

The processor 10 determines whether or not the information to be extracted acquired in step S130 includes (matches) the extraction information based on the extraction information received in step S 120 (step S14).

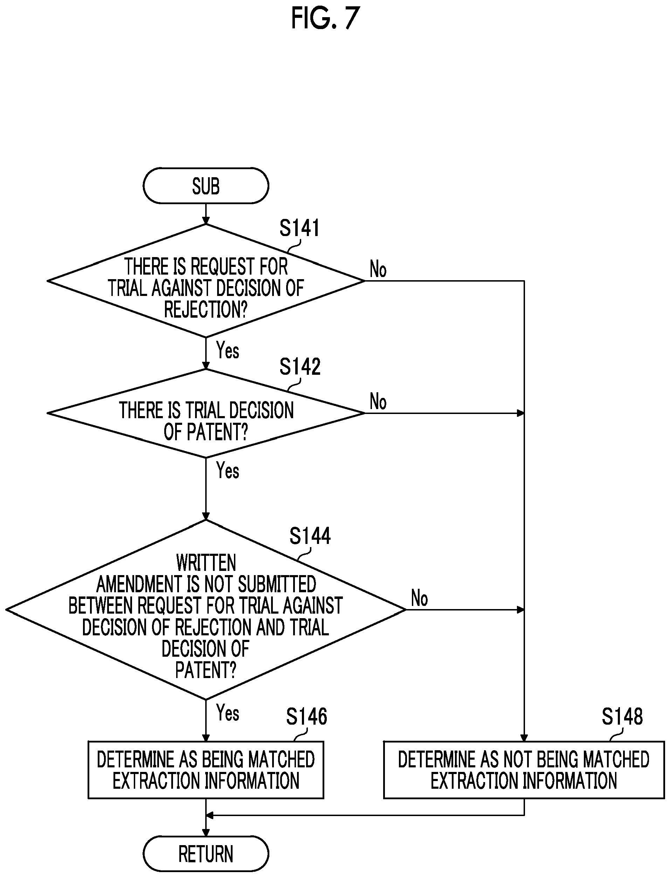

Fig. 7 is a subroutine showing an example of a process of step S140 of the flowchart of Fig. 6.

Here, a case of extracting a case where a trial decision of patent is made without amendment or correction of mistranslation after the request for trial against decision of rejection is made in a patent application in which amendment is not made upon requesting the trial against decision of rejection will be described.

In this case, it is assumed that the user sets the extraction information having progress information in time series of "request for trial against decision of rejection" → "written amendment not submitted" → "trial decision of patent", and the processor 10 receives the extraction information in step S120.

In Fig. 7, the processor 10 determines whether or not the information to be extracted, which is acquired from the character string related to the i-th patent application acquired in step S130, includes "request for trial against decision of rejection" (step S141).

In a case where the processor 10 determines that the information to be extracted does not include "request for trial against decision of rejection", the processor 10 proceeds to step S148, and determines in step S148 that the information to be extracted of the i-th patent application does not match the extraction information.

In a case where the processor 10 determines that the information to be extracted includes "request for trial against decision of rejection", the processor 10 proceeds to step S142, and determines in step S 142 whether or not the information to be extracted includes "trial decision of patent".

In a case where the processor 10 determines that the information to be extracted does not include "trial decision of patent", the processor 10 proceeds to step S148 and determines that the information to be extracted of the i-th patent application does not match the extraction information, as in the above.

In a case where the processor 10 determines that the information to be extracted includes "trial decision of patent", the processor 10 proceeds to step S144, and determines in step S144 whether the "written amendment" or the "written correction of mistranslation" is not submitted between "request for trial against decision of rejection" and "trial decision of patent" in the information to be extracted.

In a case where the processor 10 determines that the "written amendment" or the "written correction of mistranslation" is submitted between "request for trial against decision of rejection" and "trial decision of patent" from the information to be extracted (in a case of "No"), the processor 10 proceeds to step S148 and determines that the information to be extracted of the i-th patent application does not match the extraction information.

On the other hand, in a case where the processor 10 determines that the "written amendment" or the "written correction of mistranslation" is not submitted between "request for trial against decision of rejection" and "trial decision of patent" from the information to be extracted (in a case of "Yes"), the processor 10 proceeds to step S146, and determines in step S146 that the information to be extracted of the i-th patent application does not match the extraction information.

Returning to Fig. 6, in a case where the determination result in step S140 is that the information to be extracted of the i-th patent application does not match the extraction information (in a case of "No"), the processor 10 proceeds to step S170, and in a case where the determination result is that the information to be extracted of the i-th patent application matches the extraction information (in a case of "Yes"), the processor 10 proceeds to step S160 (step S150).

In step S170, the parameter i is incremented by 1, and the process proceeds to step S130. As a result, an acquisition process or the like of the information to be extracted related to the next patent application is performed.

On the other hand, in a case where the processor 10 proceeds to step S160, the processor 10 stores the identification information ("patent application number") for specifying the i-th patent application acquired in step S130 in the memory 12, or adds information (for example, a flag) indicating that the extraction is made to the "row" in which the information on the i-th patent application of the CVS sheet is recorded, and then proceeds to step S180.

In step S180, the processor 10 determines whether or not the parameter i is i = N. In a case where the processor 10 determines that the parameter i is not i = N (in a case of "No"), the processor 10 proceeds to step S130 via the process of step S170. In a case where the processor 10 determines that the parameter i is i = N (in a case of "Yes"), the processor 10 determines that the extraction process for all the plurality of (N) patent applications has been performed, and ends the present process.

The processes in steps S120 to S140 are examples, and specifically, the patent information desired by the user can be extracted as follows.
1) Case of extracting a case where a trial decision of patent is made without amendment or correction of mistranslation after the request for trial against decision of rejection is made in a patent application in which amendment is not made upon requesting the trial against decision of rejection
   The processor 10 excludes a patent application in which both the characters "request for trial" and "trial decision" are present and in which the character "written amendment" is present on the same date as or later than the "request for trial" in the information to be extracted ("interim record (application/registration)" field) acquired from the character string related to the i-th patent application from the CSV sheet, and extracts a patent application in which "registration", "decision of registration", or "trial against decision of rejection (registration)" is present in the information to be extracted ("examination/right status" field).
2) Case of extracting a case where a trial decision of patent is made without amendment or correction of mistranslation after a pre-trial examination report is issued from the examiner in a patent application in which amendment or correction of mistranslation is made upon requesting the trial against decision of rejection
   The processor 10 extracts an application in which both of characters "request for trial" and "trial decision" are present in the information to be extracted ("interim record (application/registration)" field) acquired from the character string related to the i-th patent application from the CVS sheet, extracts an application in which the character "written amendment" is present on the same date as "request for trial", excludes a patent application in which "written amendment" is present on a date later than the date of the "request for trial", and extracts a patent application in which the "examination/right status" is "registration", "decision of registration", or "trial against decision of rejection (registration)".
3) Case of extracting a case where the rejection has been overcome by the applicant without submitting the written amendment or the written correction of mistranslation

The processor 10 checks whether or not there are characters "decision of rejection" in the information to be extracted ("interim record (application/registration)" field) acquired from the character string related to the i-th patent application from the CSV sheet, and in a case where there are characters "decision of rejection", the processor 10 views a record prior to the date of "decision of rejection". In a case where there is no character of "decision of rejection", the processor 10 views the record to the end of the field. After this, the processor 10 does not view the record after the date of "decision of rejection". Then, a patent application in which the characters "notification of reasons for rejection" are present in a range to be viewed is extracted. Then, ranges in which the first "notification of reasons for rejection", the second "notification of reasons for rejection", the third "notification of reasons for rejection", ..., and responses thereto are described are specified. Then, in each range, the presence or absence of the characters "written argument", the presence or absence of the characters "written amendment", and the presence or absence of the characters "written correction of mistranslation" are checked, and results thereof are recorded in the csv sheet.

Even at the trial stage of the Japanese application, from where to where in the "interim record (application/registration)" field is accurately specified as which rejection (specifically, notification of reasons for rejection by the examiner, decision of rejection, and pre-trial examination report, notification of reasons for rejection by the trial judge, and interrogation) and then the presence or absence of submission of the "written argument", the presence or absence of submission of the "written amendment", and the presence or absence of submission of the "written correction of mistranslation" for each rejection are checked, and the results thereof may be recorded in the csv sheet.

In a case where a procedure system for examination and trial is changed, the information processing program for the application relating to the intellectual property right may be changed as appropriate. (For example, in South Korea, at some point, a pre-trial examination system was abolished and replaced with a reexamination request system.)

The extraction information has one or a plurality of pieces of progress information of any procedure including information in time series, but may have information such as "applicant/rights holder" that does not include information in time series. In this case, the patent information desired by the user can be further narrowed down by the "applicant/rights holder". In addition, in a case where the "character string" includes information on the examiner and the trial judge who are involved in the examination and the trial, the information can be added to the extraction information.

### [Others]

Examples of various processors constituting the information processing apparatus for an application relating to an intellectual property right according to the embodiment of the present invention, such as a personal computer, include a central processing unit (CPU) that is a general-purpose processor functioning as various processing units by executing a program, a programmable logic device (PLD) such as a field programmable gate array (FPGA) that is a processor having a circuit configuration changeable after manufacturing, and a dedicated electric circuit such as an application specific integrated circuit (ASIC) that is a processor having a circuit configuration dedicatedly designed to execute specific processing.

One processing unit constituting the information processing apparatus for an application relating to an intellectual property right may be configured of one of the various processors or may be configured of two or more processors of the same type or different types. For example, one processing unit may be configured of a plurality of FPGAs or a combination of a CPU and an FPGA. In addition, a plurality of processing units may be configured of one processor. As an example in which the plurality of processing units are configured by one processor, first, there is a form in which one processor is configured of a combination of one or more CPUs and software and the processor functions as the plurality of processing units, as represented by a computer of a client or a server. Second, as represented by a system on chip (SoC) or the like, a form of using a processor that implements, by one integrated circuit (IC) chip, functions of the entire system including the plurality of processing units is included. As described above, the various processing units are configured using one or more of the various processors as a hardware structure. Furthermore, the hardware structure of those various processors is more specifically an electric circuit (circuitry) in which circuit elements such as semiconductor elements are combined.

In addition, the present invention includes an information processing program for an application relating to an intellectual property right, which is installed in a computer to cause the computer to function as the information processing apparatus for an application relating to an intellectual property right according to the embodiment of the present invention, and a non-transitory computer-readable storage medium having recorded thereon the information processing program for an application relating to an intellectual property right.

Furthermore, the present invention is not limited to the above embodiment, and various modifications, of course, can be made without departing from the spirit of the present invention.

### Explanation of References

1: information processing apparatus
2: intellectual property right DB
3: network
10: processor
12: memory
14: display
16: input/output interface
18: operation unit
20: worksheet
S10 to S38, S100 to S180: step

## Claims

1. An information processing apparatus for an application relating to an intellectual property right, comprising:
a first memory that stores an information processing program for an application relating to an intellectual property right; and
a processor that executes the information processing program for an application relating to an intellectual property right to process information on the application relating to the intellectual property right acquired from an intellectual property right database,
wherein the processor performs
a process of acquiring a character string including progress information of a procedure communicated between the Patent Office and an applicant for at least one application relating to the intellectual property right, from the intellectual property right database,
a process of recognizing, for each application relating to the intellectual property right, one or a plurality of pieces of the progress information generated in time series for the application relating to the intellectual property right from the character string including the progress information, and
a process of determining, for the recognized progress information, which office action from the Patent Office corresponds to an action for the application relating to the intellectual property right taken by the applicant of the application relating to the intellectual property right.

2. The information processing apparatus for an application relating to an intellectual property right according to claim 1, further comprising:
a second memory that stores a table for information processing, the table including a first area including an item in which identification information for specifying the application relating to the intellectual property right is registered, and a second area including a plurality of items in which a plurality of pieces of progress information of procedures that are generatable in time series are registered, respectively, the procedures being communicated between the Patent Office and the applicant,
wherein the processor performs a registration process of registering the acquired identification information in the item of the first area of the table, and registering the one or plurality of pieces of the progress information in a corresponding item of the progress information in the second area of the table.

3. The information processing apparatus for an application relating to an intellectual property right according to claim 2,
wherein the registration process registers information on presence or absence of the acquired one or plurality of pieces of the progress information in the corresponding item in the second area of the table.

4. The information processing apparatus for an application relating to an intellectual property right according to claim 2 or 3,
wherein the table is configured of a worksheet of spreadsheet software,
items of the identification information and the plurality of pieces of progress information are assigned to a plurality of cells of the worksheet, respectively, and
the registration process registers information on presence or absence of the acquired identification information and one or plurality of pieces of the progress information in corresponding cells among the plurality of cells of the worksheet.

5. The information processing apparatus for an application relating to an intellectual property right according to any one of claims 2 to 4,
wherein the processor performs
a reception process of receiving, as extraction information, information indicating presence or absence of a procedure corresponding to any one or plurality of items among the plurality of items of the second area, and
an extraction process of extracting the identification information of the application relating to the intellectual property right, which satisfies a condition of the extraction information, from the table based on the received extraction information.

6. The information processing apparatus for an application relating to an intellectual property right according to claim 4,
wherein the spreadsheet software includes a search function or a filter function, and
the spreadsheet software receives a search expression or selection of one or a plurality of filters indicating presence or absence of a procedure corresponding to any one or plurality of items among the plurality of items of the second area, and extracts the identification information of the application relating to the intellectual property right satisfying the search expression or filtered by the selected filter from the worksheet using the received search expression or the selected one or plurality of filters.

7. The information processing apparatus for an application relating to an intellectual property right according to any one of claims 2 to 6,
wherein the first area of the table includes an item in which bibliographic matters including identification information and a filing date of the application relating to the intellectual property right are registered.

8. The information processing apparatus for an application relating to an intellectual property right according to claim 1,
wherein the processor performs
a reception process of receiving extraction information having one or a plurality of pieces of progress information of any procedure including information in time series, the procedure being communicated between the Patent Office and the applicant regarding an application relating to an intellectual property right,
a process of acquiring identification information for specifying the application relating to the intellectual property right and information to be extracted indicating one or a plurality of pieces of the progress information generated in time series, from the character string for each application relating to the intellectual property right, and
an extraction process of extracting the identification information of the application relating to the intellectual property right having the information to be extracted, which matches the extraction information including a time series order of the extraction information, based on the received extraction information.

9. The information processing apparatus for an application relating to an intellectual property right according to claim 8,
wherein in a case where the progress information is set as first progress information, second progress information, and third progress information in time series, the extraction information has at least one of the following:
the first progress information is present or absent before the second progress information;
the second progress information is present or absent after the first progress information;
the second progress information is present or absent between the first progress information and the third progress information; or
the second progress information is present or absent at the same time as the first progress information.

10. The information processing apparatus for an application relating to an intellectual property right according to claim 8 or 9,
wherein the extraction information has, as a progress information group consisting of a plurality of pieces of the progress information in time series, at least one of
a first progress information group including a request for trial against decision of rejection and a trial decision of registration, in which a written amendment or a written correction of mistranslation is not submitted between the request for trial against decision of rejection and the trial decision of registration,
a second progress information group including a release of pre-trial examination and the trial decision of registration, in which a written amendment or a written correction of mistranslation is not submitted between the release of pre-trial examination and the trial decision of registration, or
a third progress information group including a notification of reasons for rejection, in which the reasons for rejection in the notification of reasons for rejection are overcome without submitting a written amendment or a written correction of mistranslation after the notification of reasons for rejection is issued.

11. The information processing apparatus for an application relating to an intellectual property right according to claim 10,
wherein the third information group has at least one of
a fourth progress information group including a plurality of times of notifications of reasons for rejection, in which a written amendment or a written correction of mistranslation is not submitted between two notifications of reasons for rejection in time series,
a fifth progress information group including a notification of reasons for rejection and a decision or registration, in which the decision of registration is made without submitting a written amendment or a written correction of mistranslation after the notification of reasons for reason is issued, or
a sixth progress information group including a notification of reasons for rejection and a trial decision of registration, in which the trial decision of registration is made without submitting a written amendment or a written correction of mistranslation after the notification of reasons for reason is issued.

12. The information processing apparatus for an application relating to an intellectual property right according to any one of claims 5, 6, and 8 to 11,
wherein the processor outputs the extracted identification information.

13. The information processing apparatus for an application relating to an intellectual property right according to claim 12,
wherein the processor outputs only the extracted identification information in a list table, collectively outputs the extracted identification information to be distinguishable from non-extracted identification information, or outputs the extracted identification information in an enhanced manner to be distinguishable from the non-extracted identification information.

14. The information processing apparatus for an application relating to an intellectual property right according to any one of claims 5, 6, and 8 to 13,
wherein the processor displays the extracted identification information on a display, prints the identification information out from a printer, or stores the identification information in a memory.

15. An information processing method for an application relating to an intellectual property right, which is executed by an information processing apparatus including a first memory that stores an information processing program for an application relating to an intellectual property right, and a processor that executes the information processing program for an application relating to an intellectual property right to process information on the application relating to the intellectual property right acquired from an intellectual property right database, the method comprising:
a step of acquiring a character string including progress information of a procedure communicated between the Patent Office and an applicant for at least one application relating to the intellectual property right, from the intellectual property right database;
a step of recognizing, for each application relating to the intellectual property right, one or a plurality of pieces of the progress information generated in time series for the application relating to the intellectual property right from the character string including the progress information; and
a step of determining, for the recognized progress information, which office action from the Patent Office corresponds to an action for the application relating to the intellectual property right taken by the applicant of the application relating to the intellectual property right.

16. An information processing program causing a computer to execute the information processing method for an application relating to an intellectual property right according to claim 15.

17. A non-transitory computer-readable recording medium having the program according to claim 16 recorded thereon.
